# EUROPÄISCHE PATENTSCHRIFT

(11) **EP 1 175 573 B1**
(45) Veröffentlichungstag und Bekanntmachung des Hinweises auf die Patenterteilung: **19.05.2004**
(21) Anmeldenummer: 00929246.7
(22) Anmeldetag: 21.03.2000
(51) Int. Cl.: F16J 1/02

(54) **KOLBENMOTOR MIT EINEM ZYLINDER AUS LEICHTMETALL**
PISTON ENGINE WITH LIGHT-ALLOY CYLINDER
MOTEUR A PISTON COMPORTANT UN CYLINDRE EN ALLIAGE LEGER

(30) Priorität: 30.04.1999 DE 19919725
(43) Veröffentlichungstag der Anmeldung: 30.01.2002
(73) Patentinhaber: MAHLE GMBH, D-70376 Stuttgart (DE)
(72) Erfinder: BISCHOFBERGER, Ulrich, D-73732 Esslingen (DE)
(86) Internationale Anmeldenummer: PCT/DE2000/000920
(87) Internationale Veröffentlichungsnummer: WO 2000/066918

(56) Entgegenhaltungen:
- CH-A- 400 670
- DE-A- 3 047 978
- DE-A- 4 310 491
- PATENT ABSTRACTS OF JAPAN vol. 013, no. 334 (M-855), 27. Juli 1989 (1989-07-27) & JP 01 112079 A (TEIKOKU PISTON RING CO LTD), 28. April 1989 (1989-04-28)
- PATENT ABSTRACTS OF JAPAN vol. 016, no. 082 (M-1215), 27. Februar 1992 (1992-02-27) & JP 03 265761 A (TEIKOKU PISTON RING CO LTD), 26. November 1991 (1991-11-26)

## Beschreibung

Die Erfindung betrifft einen Kolbenmotor mit mindestens einem Kolben und mit mindestens einem Zylinder aus Leichtmetall, dessen Lauffläche verchromt ist.

Derartige Kolbenmotoren sind bekannt z. B. aus dem Artikel "Weitere Fortschritte mit verchromten Leichtmetallzylindern" in der MTZ, Jahrgang 1953, Seite 63, von Dr. E. Mahle.

Es hat sich vor kurzem gezeigt, daß diese Laufflächenpaarung bei der Entwicklung von entsprechenden Motoren - die häufig in Mopeds, Rasenmähern oder Sägen eingesetzt werden - hin zu höheren Leistungen nicht mehr ausreichend freßsicher ist. Als Ursache hierfür wurden erhöhte Seitenkräfte und daraus resultierend ein Materialübergang im Mikrobereich vom unbeschichteten Kolben in die Chromlauffläche des Zylinders festgestellt.

Als Abhilfe wurden zunächst Kolben mit einer Kunstharzgraphitbeschichtung der Lauffläche vorgesehen. Diese Beschichtung zeigte jedoch - verglichen mit dem Einsatz bei üblichen Laufflächenpaarungen - einen erhöhten Verschleiß.

Dieser Verschleiß konnte durch eine Minimierung der Rauheit der Chromschicht zwar erheblich vermindert werden, allerdings führt diese Maßnahme auch zu brandigen Kolbenringen.

Die Erfindung beschäftigt sich daher mit dem Problem, bei Kolbenmotoren mit mindestens einem Zylinder aus Leichtmetall, dessen Lauffläche verchromt ist, die Freßneigung zwischen Kolben und Zylinder zu verringern.

Dieses Problem wird gelöst durch das kennzeichnende Merkmal des Anspruchs 1. Vorteilhafte Weiterbildungen sind Gegenstand der Unteransprüche.
Erst durch die erfindungsgemäße Verwendung von Kunstharzschichten mit eingelagerten Hartpartikeln wurde der gewünschte Effekt erzielt. Dies wird darauf zurückgeführt, daß sich die erfindungsgemäße Schicht mittels den eingelagerten Hartpartikeln quasi von selbst eine günstige Gegenlauffläche schafft, indem die Chromschicht "geschliffen" wird. Für den erfindungsgemäßen Effekt genügen schon kleine Mengen an Hartpartikeln, z. B. ca. 5 Gewichtsprozent, vorzugsweise weniger als 3 Gewichtsprozent. Auch ein Anteil von nur 1 % kann meist den gewünschten Effekt erzeugen. Der bevorzugte mittlere Partikeldurchmesser der Hartpartikel liegt bei 3 - 7 µm.

Die Herstellung der Beschichtung erfolgt durch Siebdruck, Tampondruck oder durch Spritzen.

Aus der DE 3047978 A ist es an sich schon bekannt, die Lauffläche eines Kolbens und/oder eines Zylinders für insbesondere Kolbenkompressoren mit einem auf Epoxidharzbasis hergestellten Lack und einem darin beigemengten oxidkeramischen Werkstoff zu beschichten, dort ist jedoch die Beschichtung ausschließlich als Alternative zu den bekannten Eisen-, Chrom- oder Nickelschichten offenbart, die als verhältnismäßig kostspielig und verfahrenstechnisch teilweise schwierig herzustellen beschrieben werden. Es wird in der Entgegenhaltung abschließend erwähnt, daß nur einer der beiden Friktionspartner beschichtet wird und daß sich wegen des geringeren Arbeitsaufwands der Kolben anbietet.

Die Erfindung wird im folgenden anhand eines Ausführungsbeispiels näher erläutert. Es zeigt:

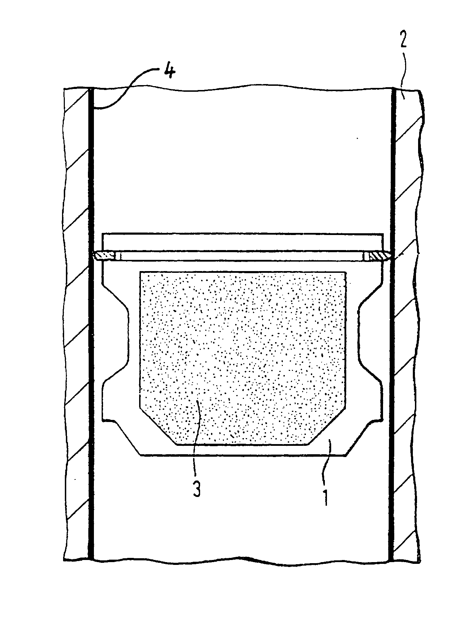

- Fig. 1: einen erfindungsgemäßen Kolbenmotor.

Ein Kolben 1 aus einer Aluminiumlegierung ist in einem Zylinder 2 aus einer Aluminiumlegierung eingebaut, dessen Lauffläche mit einer Chromschicht 4 beschichtet ist. Der Kolben selbst ist an seiner Lauffläche mit einer Kunstharzschicht 3 mit eingelagerten Hartstoffpartikeln aus Al₂O₃ beschichtet. Der Kolben ist über ein nicht dargestelltes Pleuel mit einer nicht dargestellten Kurbelwelle verbunden.

## Patentansprüche

1. Kolbenmotor mit mindestens einem Kolben (1) und mindestens einem Zylinder (2) aus Leichtmetall, dessen Lauffläche verchromt ist,
**dadurch gekennzeichnet,**
**daß** die Lauffläche des Kolbens (1) zumindest teilweise eine Beschichtung (3) auf Kunstharzbasis mit eingelagerten Hartpartikeln mit einem mittleren Partikeldurchmesser von maximal 10 µm aufweist.

2. Kolbenmotor nach Anspruch 1,
**dadurch gekennzeichnet,**
**daß** die Hartpartikel aus Al₂O₃, SiC, Si₃N₄, TiC oder WC bestehen.

3. Kolbenmotor nach Anspruch 1 oder 2,
**dadurch gekennzeichnet,**
**daß** der Gewichtsanteil der Hartpartikel in der Beschichtung (3) kleiner 5 % ist.

4. Kolbenmotor nach Anspruch 1,
**dadurch gekennzeichnet,**
**daß** zur Verbesserung der Gleiteigenschaften Graphit oder MoS₂ in der Schicht enthalten ist.

## Claims

1. A piston engine having at least one piston (1) and at least one cylinder (2) made of light alloy whose running surface is chrome-plated,
**characterised in that** the running surface of the piston (1) at least partially comprises a coating (3) based on synthetic resin with incorporated hard particles having an average particle diameter of 10 pm at most.

2. A piston engine according to Claim 1,
**characterised in that** the hard particles are made from Al₂O₃, SiC, Si₃N₄, TiC or WC.

3. A piston engine according to Claim 1 or 2,
**characterised in that** the percentage by weight of the hard particles in the coating (3) is less than 5 %.

4. A piston engine according to Claim 1,
**characterised in that** graphite or MoS₂ is contained in the layer to improve the sliding properties.

## Revendications

1. Moteur à piston comportant au moins un piston (1) et au moins un cylindre (2) en alliage léger dont la portée est chromée, **caractérisé en ce que** la portée du piston (1) présente au moins en partie un revêtement (3) à base de résine synthétique comportant des particules dures incluses d'un diamètre moyen de particules de 10 µm au maximum.

2. Moteur à piston suivant la revendication 1, **caractérisé en ce que** les particules dures sont constituées d'Al₂O₃, SiC, Si₃N₄, TiC ou WC.

3. Moteur à piston suivant l'une des revendications 1 et 2, **caractérisé en ce que** la proportion en poids des particules dures dans le revêtement (3) est inférieure à 5 %.

4. Moteur à piston suivant la revendication 1, **caractérisé en ce que** du graphite ou du MoS₂ est contenu dans la couche pour améliorer les propriétés de glissement.
